(19) Europäisches Patentamt
European Patent Office
Office européen des brevets

(11) **EP 3 831 525 A1**

(12) **EUROPEAN PATENT APPLICATION**

(43) Date of publication:
**09.06.2021 Bulletin 2021/23**

(21) Application number: **19213529.1**

(22) Date of filing: **04.12.2019**

(51) Int Cl.:
**B23K 5/18** (2006.01)　　　　**B23K 9/04** (2006.01)
**B23K 10/02** (2006.01)　　　　**B23K 11/00** (2006.01)
**B23K 15/00** (2006.01)　　　　B23K 9/12 (2006.01)

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
**KH MA MD TN**

(71) Applicant: **Procada AB**
**461 54 Trollhättan (SE)**

(72) Inventors:
• **HERALIC, Almir**
**414 65 GÖTEBORG (SE)**
• **HAGQVIST, Petter**
**461 54 TROLLHÄTTAN (SE)**

(74) Representative: **Henricson Briggs, David James**
**Pine IPR AB**
**Stena Center 1A-D**
**412 92 Göteborg (SE)**

(54) **ADDITIVE MANUFACTURING**

(57)　　An apparatus for depositing metal to a substrate having: a nozzle arranged, a feedstock actuator for feeding a metal strip to said nozzle; a position actuator for moving said nozzle relative said substrate, a control system for controlling the substrate to nozzle distance, a heat source for melting said metal strip into a weld pool on said substrate, an electrical power source for supplying a current via the metal strip into said substrate. The control system determines an electrical conductance between the metal strip and the substrate based on said current by measuring at least one electrical property of said current, and controls the nozzle to substrate distance based on

$$\sum_{k=0}^{m} c_k G^k$$

where $c_k$ is a constant, G is said determined conductance and n is any integer between 1 and 10.

Fig. 3

EP 3 831 525 A1

## Description

Technical field

The inventive concept described herein, generally relates to an additive manufacturing apparatus for adding metal to a substrate by means of metal deposition along a deposition direction, as well as to a process for adding metal to a substrate by means of metal deposition along a deposition direction.

Background

The process of metal additive manufacturing is a technique in which a heat source, for instance a laser is used to melt metal wire into a metal deposit. It can thus be described as a metal printer. Other terms used for the technology are namely, laser metal deposition, and directed energy deposition. Since this technique can offer the production of products with fairly complex geometries with a high throughput with minimal wastage of expensive raw material, it is advantageous in many industries, for instance in the aerospace industry.

In general, the principle of this process can be described as a high-power laser creating a pool of molten metal on a workpiece or substrate, into which the wire is fed. The high temperature of the weld pool and the laser radiation heats up the wire and causes it to melt. The wire feeder is, together with the laser optics, attached to a processing tool which is moved along a deposition path by an industrial robot. This causes the molten wire to solidify along this deposition path, forming beads. These beads are placed side-by-side and layer-upon-layer, forming 3D structures upon the substrate using suitable robot movements. This process however is highly sensitive to disturbances and exhibits non-linear behaviour in terms of deposit geometries and input parameters. Positioning of the tool relative to the substrate and the wire feed rate is essential in maintaining a stable deposition process. If the distance between the tool and the workpiece is adequate, a continuous transition of material from the solid wire into the weld pool will occur. If the distance is too large, a neck will form in the material transfer, which is essentially a weak link. In case the distance increases further, this neck may become disrupted, in which case the wire will be molten independently of the substrate. A droplet will build up at the wire tip, before it eventually grows too large to be sustained by surface tension and falls down onto the substrate. This droplet transfer will give an uneven surface, poorly suited for further deposition. If the distance is too small, the wire will protrude through the weld pool into the solid substrate, which is referred to as "stubbing". This will cause the wire to rapidly oscillate from side to side, scraping onto the unmolten part of the substrate, causing lack-of-fusion defects in the deposited material. Disturbances in distance may be caused by process variations due to deposit geometry, temperature accumulation or poor planning of deposition paths.

In either case, it is essential to have good control on the distance of the wire tip and the weld pool on the substrate. In this regard, GB2551163A discloses a laser metal deposition with wire apparatus and associated process with a laser configured to melt a wire, a nozzle configured to extrude the wire, a DC current source configured to supply current through the extruded wire into a substrate; and a wheatstone bridge, wherein the resistance between the nozzle and the substrate forms one resistance $R_x$ of the wheatstone bridge, and wherein the remainder of the wheatstone bridge is supplied by an AC voltage source isolated from the DC current source by capacitors C and/or a band-pass filter F. The apparatus enables the combination of thermoelectric resistance heating and the in situ measurement of the resistance of the nozzle to weld-pool to substrate to determine the distance between the tool and substrate surface. The possibility of other AC/DC bridge configurations is also indicated in this document, and a variable potentiometer or decade-resistor $R_{ref}$ may also be used.

However, the relation between resistance and distance is rather complex, and depends on many parameters such as the position of the wire tip, the temperature, the area etc. Additionally, there is often a high demand on both speed and accuracy to fulfil the requirements put on the manufacturing. Therefore, there is a need for a better control of the manufacturing process.

Summary of the invention

It is an object of the present invention to overcome or at least alleviate the above described problem.

1. According to a first aspect of the invention, an additive manufacturing apparatus for adding metal to a substrate by means of metal deposition along a deposition direction is provided, comprising:

- a nozzle configured be arranged at a distance from a substrate, as well as to output a metal strip;
- a feedstock actuator configured to feed a metal strip to the nozzle;
- a position actuator configured to move the nozzle relative the substrate;
- a control system comprising the position actuator, which control system is configured to control the substrate to nozzle distance, the substrate to nozzle distance being the distance between the substrate and said nozzle in a direction perpendicular to the deposition direction,
- a heat source configured to melt the metal strip into a weld pool on the substrate,
- an electrical power source configured to supply a current via the metal strip into the substrate,

wherein the control system is configured to determine an electrical conductance between the metal strip and the substrate by measuring at least one electrical property related to the supplied current, and to control the nozzle to substrate distance based on

$$d = a + bG$$

where a and b are constants, d is the distance and G is the determined conductance.

According to one exemplifying embodiment the heat source that provides the required heat for melting the wire strip may be provided by a number of different means, the heat source is e.g. an electric arc, a plasma, resistive heating, inductive heating, flame, a laser, or alternatively an electron beam. In the latter two examples, the electron or laser beam may be directed towards the substrate and the extruded wire strip, so to melt the two into a melt pool on the substrate.

The electrical power for establishing a current between the metal strip and the substrate may be provided by a battery source, or alternatively by a welding source. Alternatively, other sources such as an AC voltage source, a DC voltage source, voltage regulated source, a current regulated source, or any other alternative electrical source may provide the required electrical power.

The feedstock material being the metal strip, may be a metal wire, such as a solid wire or alternatively a cored wire. Alternatively, the metal strip may be a metal band, or any other metallic geometry that has a high aspect ratio, or expressed differently its end diameter may be is small compared to its length.

According to one exemplifying embodiment, the feedstock actuator may then be a wire feeder, or alternatively in the case of a metal band, a band feeder.

The position actuator may be any one or combination of the following: single axis linear actuator, industrial robot, gantry systems, orbital welding system, Stewart platform, or a custom made position actuator.

The position actuator may adjust the position of the nozzle, including the protruding tip of the metal strip relative to the substrate. The bandwidth of the actuator, may preferably be significantly greater than the variations in the surface profile of the substrate. By this it is meant that, the position actuator shall preferably be able to adjust the axial position of the nozzle, or alternatively feedstock material tip in a larger amplitude than the topological variations of the substrate surface so to avoid physical encounter of the nozzle with the substrate surface, and so the metal strip tip may be moved up and down along the axial direction with high velocity and be able to follow the profile of the substrate.

According to some embodiments, the control system is further configured to control the feedstock actuator, the electrical power source, and the heat source.

By controlling the feedstock actuator, the rate and or amount of metal strip that is extruded from the nozzle and exposed to the heat source to be melted into the met pool may be adjusted. Following the same logic, depending on the present situation of the additive manufacturing process, the heat source may be controlled so to provide more or less heat to the melt pool, and the electrical power source may be controlled in order to adjust the established current.

According to one exemplifying embodiment, the apparatus, wherein the control system comprises: a measurement means, configured to measure the at least one electrical property and to determine at least one measured electrical property, a signal processing means, configured to process the at least one measured electrical property, and determine the value proportional to the electrical conductance, a signal linearization means, configured to linearize the value proportional to conductance so as to correspond to the nozzle to substrate distance, signal transferring means for transferring said linearized value to said position actuator. In more detail, and according to one exemplifying embodiment the apparatus, wherein the control system comprises: signal transferring means configured to provide an output from the signal processing means to a control unit configured to control at least one of the feedstock actuator, the electrical power source, and the heat source, which control unit is configured to control the at least one of the feedstock actuator, the electrical power source, and the heat source based on the received output from the signal processing means.

Resistance can e.g. be determined by determining the current and potential of a circuit.

The invention is based on a realisation by the inventors that by basing the control of the nozzle on a value proportional to the conductance a more effective and accurate control of the nozzle is achieved. According to the method identified by the inventors the total resistance over the wire and the substrate is viewed as two resistances in series; one being the static resistance due to the passive elements of the circuit such as cables, etc., and the other being the resistance varying with respect to distance. The varying resistance may be assumed infinite when there is no contact between the extruded wire strip tip and the substrate.

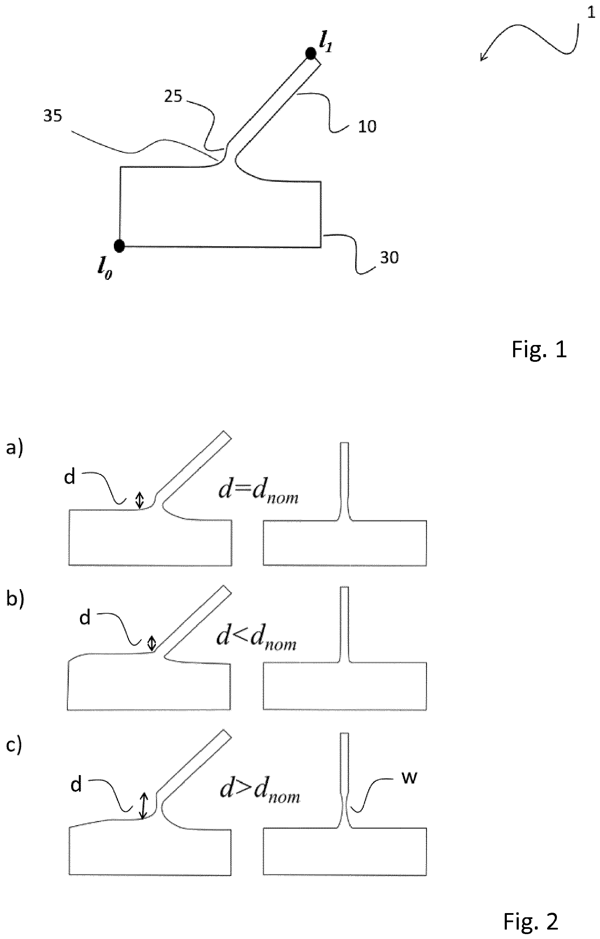

In more detail, in the electric circuit shown in figure 1, which schematically illustrates a nozzle with a protruding metal strip tip and a substrate during an additive manufacturing process, the electrical resistance between the point $I_0$ and $I_1$ may be calculated as follows:

$$R = \int_{l_0}^{l_1} \frac{\rho(T(l))dl}{A(l)}$$

wherein, p is the resistivity of the material and A is the cross-sectional area of the conductor. According to the formula above, resistivity is a function of temperature, which in turn may vary with the position along the circuit. The area may also vary along the circuit. Furthermore, and as explained in the background, depending on the position of the wire tip relative to the substrate, the geometry of the molten material may differ. A schematic view of this is shown in figure 2.

In order to control the distance based on resistance there is a need to relate the measured resistance to the different distances illustrated in the figure 2a-c. For this, the distance at which contact is severed between metal strip tip and substrate, i.e. resistance is assumed infinite is referred to as the maximum distance (dmax). If the distance is zero, the varying resistance may be assumed to be zero, meaning that the total resistance will be equal to the static resistance of the circuit. In between the two extreme cases, there is assumed to be a monotonically increasing continuous function which satisfies:

$$R_{tot}(d_{min}) = c \text{ and } \lim_{d \to d_{max}} R_{tot}(d) = \infty$$

Where d is the distance, c is a constant and $R_{tot}$ is the total resistance of the circuit.

The inventors have selected one solution that satisfies these criteria:

$$R_{tot}(d) = \frac{k}{d_{max} - d}$$

where k is a constant value. Solving this for distance results in:

$$d = d_{max} - \frac{k}{R_{tot}}$$

Since conductance (G) is the inverse of resistance, by substituting $R_{tot}$ with its inverse value, gives the following linear function:

$$d = d_{max} - kG$$

which may in turn be used as a linear approximation for controlling the nozzle to substrate distance.

The above linear function is one solution of many that may satisfy the above-mentioned boundary condition, and in this linear function the distance is a first degree polynomial of conductance and the distance is proportional to the conductance.

According to one exemplifying embodiment, said nozzle to substrate distance is controlled based on a value d according to:

$$d = a + (bG)^n$$

where G is the conductance, a is a constant and n is any number larger than zero, or where n is any number between 0 and 10. According to one example n is any number larger than 0.2, or larger than 0.3, or larger than 0.4, or larger than 0.5, or larger than 0.6, or larger than 0.7. Additionally, or alternatively, n any number smaller than 8, or smaller than 7, or smaller than 5, or smaller than 3, or smaller than 2, or smaller than 1.5. According to one example n is any number between 0.2 and 7, or where n is any number between 0.3 and 5, or where n is any number between 0.4 and 3, or where n is any number between 0.4 and 3, or where n is any number between 0.5 and 2.5.

According to one exemplifying embodiment, said nozzle to substrate distance is controlled based on a value d according:

$$d = \sum_{k=0}^{m} c_k G^k$$

where m is at least 2, or where m is any integer between 2 and 10, or any integer between 2 and 5, or any integer between 2 and 3. G is the conductance and $c_k$ is a constant.

According to one exemplifying embodiment, the apparatus, wherein the at least one electrical property comprises an electrical potential at a first position and an electrical potential at a second position, the first position being one of the nozzle, the feedstock actuator and a contact point to the metal strip at a distance from the substrate, and the second position being one of the substrate and ground.

Additionally or alternatively, the apparatus wherein the at least one electrical property comprises an electrical current being measured between the power source and one of ground, the substrate and the wire strip. According to one example, the apparatus wherein the measurement means comprises a current sensor configured to measure the electrical current.

According to one exemplifying embodiment, the current sensor may be selected from a group comprising Rogowski coil, current transformer, Hall effect sensor, flux-gate sensor, magneto-resistive sensor, and a shunt resistor or a combination thereof.

It is noted that, there may be a potential difference between the unmolten wire strip and the substrate. In this case, the measurement may be carried out between any conducting object which is in contact with any point of the metal strip.

In some embodiments, the signal processing comprises filtering, the filtering may comprise low-pass filtering, band-pass filtering, notch filtering, or non-linear filtering, or a combination of these filtering.

Additionally or alternatively, the signal filtering may be carried out by averaging.

Additionally or alternatively, the signal processing may be carried out by artificial intelligence signal processing.

Additionally or alternatively, the signal processing and/or the linearization may be implemented in for instance at least one DSP, FPGA, Micro controller, SoC, single board computer, PLC, or PC, or in a combination of the same.

Additionally or alternatively, linearization may be performed by a linear approximation of any of the alternative following process states: conductance, resistance, a polynomial of conductance, a polynomial of resistance, or alternatively, any other function of current and voltage.

In a preferred embodiment of this invention, the linearization is carried out on conductance, or alternatively a polynomial of conductance.

According to one exemplifying embodiment, the measured electrical signals are transformed or translated or mapped into a value which is approximately proportional to the distance between the nozzle and the substrate.

According to one exemplifying embodiment, the non-linear conductance signal may be explicitly linearized through some transform to have a linear relation to distance. Alternatively, it may be performed implicitly by supplying the conductance signal directly to the position actuator given that the conductance range is narrow enough for a linear approximation of the conductance-distance relation to be valid.

According to one exemplifying embodiment, the control system further comprises transferring means for transfer of the output of the signal processing to the linear position actuator and optionally to other components of the apparatus, where the transferred output of the signal processing is used to adjust the properties of these components.

According to one exemplifying embodiment, the control system may further comprise P, or PI, or PID controller.

According to a second aspect of the invention, there is provided an additive manufacturing process for adding metal to a substrate by means of metal deposition along a deposition direction comprising the steps of:

a) providing a substrate,
b) providing a nozzle at a nozzle to substrate distance from the substrate,
c) feeding a metal strip to the nozzle,
d) outputting the metal strip through the nozzle,
e) melting the output metal strip into a weld pool on the substrate by a heat source,
f) supplying a current through the substrate via the metal strip by a power source,
g) determining the conductance by measuring at least one electrical property of the supplied current, and
h) controlling the nozzle to substrate distance between the nozzle and substrate based on a value proportional to the conductance by use of a position actuator, wherein the substrate to nozzle distance is the distance between the substrate and the nozzle in a direction perpendicular to the deposition direction.

According to a third aspect of the invention, there is provided an additive manufacturing apparatus for adding metal to a substrate by means of metal deposition along a deposition direction, comprising: a nozzle configured be arranged at a distance from a substrate, as well as to output a metal strip; a feedstock actuator configured to feed a metal strip to the nozzle; a position actuator configured to move the nozzle relative the substrate; a control system comprising the position actuator, which control system is configured to control the substrate to nozzle distance, the substrate to nozzle distance being the distance between the substrate and the nozzle in a direction perpendicular to the deposition direction, a heat source configured to melt the metal strip into a weld pool on the substrate, an electrical power source configured to supply a current via the metal strip into the substrate, wherein the control system is configured to determine an electrical conductance between the metal strip and the substrate based on at least one electrical property related to the current, and to control said nozzle to substrate distance based on a value according to:

$$a + (bG)^n$$

where a and b are constants, G is said determined conductance and n is any number between 0.5 and 2.
What has been stated above in relation to said first aspect is generally also applicable to said second and third aspects.

Brief description of the drawings

The above, as well as additional objects, features and advantages of the present inventive concept, will be better understood through the following illustrative and non-limiting detailed description of different embodiments of the present inventive concept, with reference to the appended drawings, wherein:

Figure 1 schematically illustrates a nozzle with a protruding metal strip tip and a substrate during an additive manufacturing process.
Figures 2a-c schematically demonstrate three different exemplifying scenarios of the additive manufacturing for different distances between the nozzle and the substrate.
Figure 3 is a schematic demonstration of an additive manufacturing apparatus 100 according to one embodiment of this invention.

Figure 4 is a schematic diagram of the main steps for performing the additive manufacturing process according to one exemplifying embodiment of the present invention.

Detailed description

The present invention will now be described more fully hereinafter with reference to the accompanying drawings, in which currently preferred embodiments of the invention are shown. This invention may, however, be embodied in many different forms and should not be construed as limited to the embodiments set forth herein; rather, these embodiments are provided for thoroughness and completeness, and fully convey the scope of the invention to the skilled person.

Figure 1 is discussed above in the Summary section.

Figures 2a-c schematically demonstrate three different exemplifying scenarios of the additive manufacturing with respect to the distance d of the nozzle 10 (and the metal strip tip 25) and the substrate 30. In figure 2a, the distance d is the optimal distance $d_{nom}$, and therefore represents the optimal condition in which the process is preferred to take place in. Figure 2b demonstrates a situation in which the distance d is smaller than the optimal distance $d_{nom}$, therefore stubbing occurs. Figure 2c demonstrates a situation in which the distance d is larger than the optimal distance $d_{nom}$, therefore a weak link w has formed.

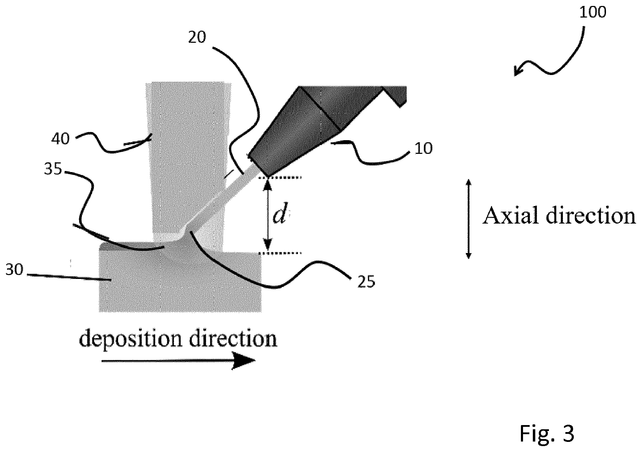

Figure 3 is a schematic demonstration of an additive manufacturing apparatus 100 according to one embodiment of this invention. According to this example the axial direction coincides with the vertical direction, configurations where the deposition direction do not coincide with the axial direction are also forseeable. A nozzle 10 is held at a nozzle to substrate distance d above a substrate 30, and the nozzle to substrate distance is always orthogonal to the deposition direction, which is indicated by an arrow in Fig 3. A wire strip 20 is fed to the nozzle 20 and is extruded from on end so that the metal strip tip 25 comes into close proximity to the substrate 30 or such that it has physical contact with the substrate 30. In the embodiment depicted in figure 1, the heat source is a laser (not shown), from which a laser beam 40 is directed towards the protruding tip 25 of the metal strip 20 and the substrate. The laser beam 40 melts the metal strip into a melt pool 35 on the substrate 30. The nozzle 10, and simultaneously the laser beam 40 are moved in the deposition direction with a constant pace. In addition to being moved in the deposing direction, the nozzle 10 can be moved up or down along the axial direction, so to adjust the nozzle to substrate distance d of the wire tip 25 in response to input provided by the control unit (not shown). In whole, an electrical power source (not shown) establishes a current via metal strip 20 into the substrate 30.

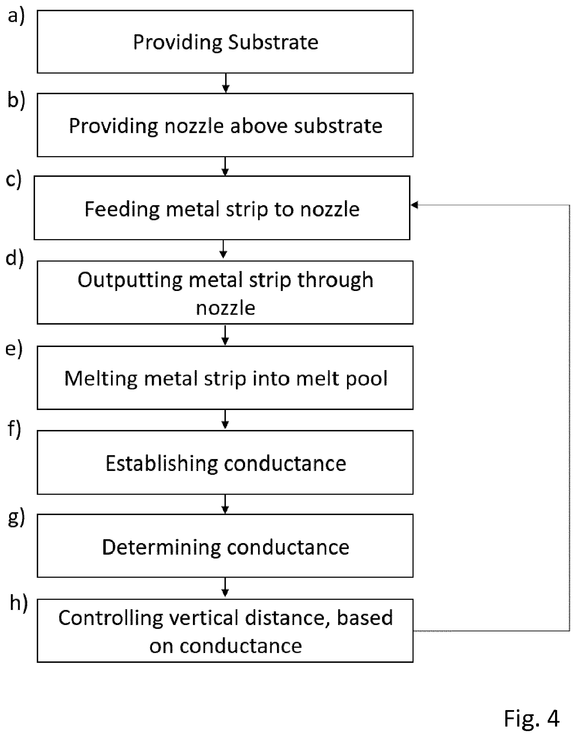

Figure 4 is a schematic diagram of the main steps for performing the additive manufacturing process according to one exemplifying embodiment of the present invention. In step a) a substrate should be provided on which the additive manufacturing process is to be carried out. In step b) nozzle is provided above the substrate. The nozzle will be arranged at a nozzle to substrate distance from the substrate. According to step c) a metal strip is fed to the nozzle, which then is outputted though the nozzle towards the substrate and a heat source located above the substrate according to step d). It is noted that, it is preferred that the nozzle to substrate distance is maintained at an optimum value in order to avoid substrate stubbing by the wire tip in case of too short of a distance, or a weak link between the substrate and the wire tip in case of too large of a distance. The heat source will then melt the protruding tip of the metal strip according to step e) into a melt pool on the substrate. An electrical power source will establish a current, and the control unit will determine the conductance e.g through the established current according to the consecutive steps of f) and g). Once the conductance have been determined, an nozzle to substrate distance will be calculated. Based on e.g. a comparison of the calculated value and the optimal value of the nozzle to substrate distance, the control unit will deliver input to the linear position actuator so to increase, decrease, or alternatively maintain the nozzle to substrate distance. The latter is shown in step h) of the step-flow diagram of figure 4. So long as the additive manufacturing process is continued, this comparison of the optimal and calculated distance values, and input to the position actuator will be constantly carried out by repeating the steps c-h) of the step-flow diagram of figure 4.

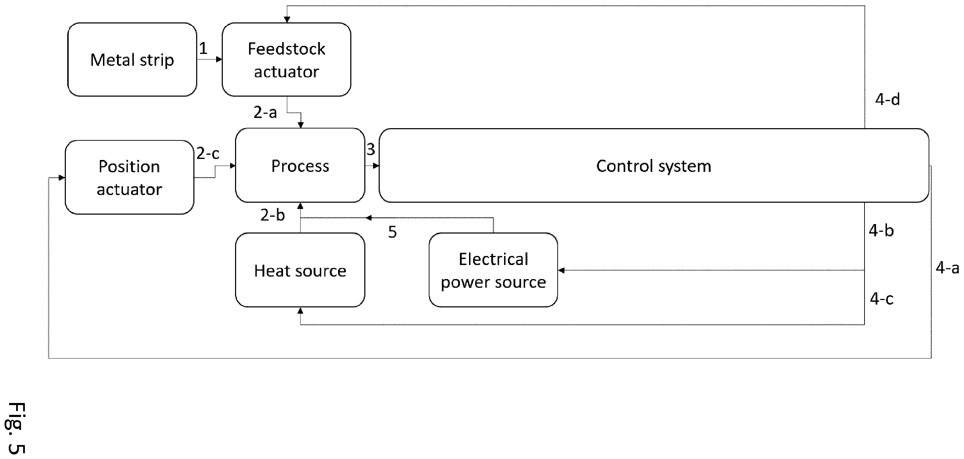

Figure 5 is a demonstration of how the key components of the additive manufacturing apparatus are connected to one another in relation to the additive manufacturing process described in more detail in relation to Fig 4. Walking through the components of figure 5, in process step 1, a metal strip 20 is fed to the nozzle 10, through a feed stock actuator. In process step 52a, the feedstock actuator controls the extrusion of the wire strip 20, so to expose it to the heat source, which heat source heats the wire strip 20, in process step 52b, so that the wire strip is melted and consumed in the additive manufacturing process. Simultaneously, a linear position actuator controls the nozzle to substrate distance of the nozzle 10 in process step 52c. An electrical power source establishes an electric current in process step 55 e.g. through the nozzle 10 and the substrate 30. At least one electrical property of the additive manufacturing process is determined e.g. by measuring a potential difference in the metal strip, and the electrical property (e.g. a voltage difference) is processed by a control unit in process step 53 to calculate an approximation of the nozzle to substrate distance $d_{calc}$. This is done e.g. by first using the voltage difference and/or current to determine the conductance G=1/R, and thereafter determining the approximation $d_{calc}$ e.g. by using the formula $d_{calc} = d_{max} - kG$.

The value resulting from processing of the electrical property, is then transferred in process step 54a to the linear position actuator, which adjusts the nozzle to substrate distance based on the received value. Optionally, in process step 53 or in process step 54a, $d_{calc}$ is translated into value fitted to the working range of the actuator. In process steps 54b, 54c, and 54d, which are optional, the control system delivers input based on said at least one electrical property to one, two or all of the electrical power source, the heat source and the feedstock actuator, which in turn are adjusted based on this input in order to gain the optimal metal deposition.

According to one exemplifying embodiment, the control system measures one or more electrical properties of the additive manufacturing process, calculates conductance based on the one or more measured electrical properties, determines a nozzle to substrate distance based on the calculated conductance, and implements this via input to the corresponding components of the additive manufacturing apparatus.

In more detail, when calculating the conductance, the voltage and/or the current is measured while the additive manufacturing process is taking place. It may be that conductance is first calculated though the measured voltage and current signals, and later processed, or alternatively, the measured current and voltage signals are processed before calculating conductance. In either case, from the measured electrical values the resistance may be calculated, and then substituted by its inverse; conductance. As explained earlier in the text, the general relation between distance and conductance will be a non-linear function; and, as explained above, the non-linear conductance signal can be explicitly linearized through a transform to have a linear relation to distance. This linear approximation will allow for controlling the distance based on the measured electrical properties. The calculated value of distance may be compared to the optimal distance value, and the result may be implemented as feedback to the linear position actuator. Alternatively, it may be performed implicitly by supplying the conductance signal directly to the distance controller. This alternative may e.g. be useful if the conductance range is narrow enough for a linear approximation of the conductance-distance relation to be valid.

The person skilled in the art realizes that the present invention by no means is limited to the preferred embodiments described above. On the contrary, many modifications and variations are possible within the scope of the appended claims. Additionally, variations to the disclosed embodiments can be understood and effected by the skilled person in practicing the claimed invention, from a study of the drawings, the disclosure, and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measured cannot be used to advantage.

## Claims

1. An additive manufacturing apparatus for adding metal to a substrate by means of metal deposition along a deposition direction, comprising:

   - a nozzle configured be arranged at a distance from a substrate, as well as to output a metal strip;
   - a feedstock actuator configured to feed a metal strip to said nozzle;
   - a position actuator configured to move said nozzle relative said substrate;
   - a control system comprising said position actuator, which control system is configured to control the substrate to nozzle distance, said substrate to nozzle distance being the distance between said substrate and said nozzle in a direction perpendicular to the deposition direction,
   - a heat source configured to melt said metal strip into a weld pool on said substrate,
   - an electrical power source configured to supply a current via the metal strip into said substrate,

   wherein said control system is configured to determine an electrical conductance between the metal strip and the substrate by measuring at least one electrical property related to said supplied current, and to control said nozzle to substrate distance based on

   $$d = a + bG$$

   where a and b are constants, d is the distance and G is said determined conductance.

2. The apparatus according to claim 1, wherein said heat source is any of a laser, an electric arc, a plasma, resistive heating, inductive heating, a flame, a laser, or an electron beam.

3. The apparatus according to any of the preceding claims, wherein said metal strip is a metal wire or a metal band.

4. The apparatus according to any of the preceding claims, wherein said control system comprises:

   - a measurement means, configured to measure said at least one electrical property and to determine at least one measured electrical property,
   - a signal processing means, configured to process said at least one measured electrical property, and determine said value proportional to said electrical conductance,
- a signal linearization means, configured to linearize said value proportional to conductance so as to correspond to said nozzle to substrate distance
- signal transferring means for transferring said linearized value to said position actuator.

5. The apparatus according to claim 4, wherein said control system comprises:

- signal transferring means configured to provide an output from said signal processing means to a control unit configured to control at least one of said feedstock actuator, said electrical power source, and said heat source,
- which control unit is configured to control said at least one of said feedstock actuator, said electrical power source, and said heat source based on the received output from said signal processing means.

6. The apparatus according to anyone of the preceding claims, wherein said at least one electrical property comprises an electrical potential at a first position and an electrical potential at a second position, said first position being one of said nozzle, said feedstock actuator and a contact point to said metal strip at a distance from said substrate, and said second position being one of said substrate and ground.

7. The apparatus according to any one of the preceding claims wherein said at least one electrical property comprises an electrical current being measured between said power source and one of ground, said substrate and said wire strip.

8. The apparatus according to claim 7, wherein said measurement means comprises a current sensor configured to measure said electrical current.

9. An additive manufacturing process for adding metal to a substrate by means of metal deposition along a deposition direction comprising the steps of:

a) providing a substrate,
b) providing a nozzle at a nozzle to substrate distance from said substrate,
c) feeding a metal strip to said nozzle,
d) outputting said metal strip through the nozzle,
e) melting said output metal strip into a weld pool on said substrate by a heat source,
f) supplying a current through said substrate via said metal strip by a power source,
g) determining said conductance by measuring at least one electrical property of said supplied current, and

h) controlling said nozzle to substrate distance between said nozzle and substrate based on a value proportional to said conductance by use of a position actuator, wherein said substrate to nozzle distance is the distance between said substrate and said nozzle in a direction perpendicular to the deposition direction.

10. An additive manufacturing process according to claim 9, wherein steps c - h are repeated during the manufacturing process.

11. An additive manufacturing process according to claims 9 and 10, wherein
the step of controlling said nozzle to substrate distance further comprises the steps of:

- linearization of said value proportional to conductance so as to correspond to said nozzle to substrate distance, and
- providing the said linearized value to said position actuator.

12. An additive manufacturing process according to any one of claims 9 to 11, wherein the step of controlling said nozzle to substrate distance further comprises controlling at least one of said linear position actuator, said feedstock actuator, said electrical power source, and said heat source based on a value proportional to said conductance.

13. An additive manufacturing apparatus for adding metal to a substrate by means of metal deposition along a deposition direction, comprising:

- a nozzle configured be arranged at a distance from a substrate, as well as to output a metal strip;
- a feedstock actuator configured to feed a metal strip to said nozzle;
- a position actuator configured to move said nozzle relative said substrate;
- a control system comprising said position actuator, which control system is configured to control the substrate to nozzle distance, said substrate to nozzle distance being the distance between said substrate and said nozzle in a direction perpendicular to the deposition direction,
- a heat source configured to melt said metal strip into a weld pool on said substrate,
- an electrical power source configured to supply a current via the metal strip into said substrate,

wherein said control system is configured to determine an electrical conductance between the metal strip and the substrate based on at least one electrical property related to said current,
and to control said nozzle to substrate distance based on a value according to:

$$a + (bG)^n$$

where a and b are constants, G is said determined conductance and n is any number between 0.5 and 2.

14. An additive manufacturing apparatus for adding metal to a substrate by means of metal deposition along a deposition direction, comprising:

- a nozzle configured be arranged at a distance from a substrate, as well as to output a metal strip;
- a feedstock actuator configured to feed a metal strip to said nozzle;
- a position actuator configured to move said nozzle relative said substrate;
- a control system comprising said position actuator, which control system is configured to control the substrate to nozzle distance, said substrate to nozzle distance being the distance between said substrate and said nozzle in a direction perpendicular to the deposition direction,
- a heat source configured to melt said metal strip into a weld pool on said substrate,
- an electrical power source configured to supply a current via the metal strip into said substrate,

wherein said control system is configured to determine an electrical conductance between the metal strip and the substrate based on at least one electrical property current,
and to control said nozzle to substrate distance based on a value according to:

$$\sum_{k=0}^{m} c_k G^k$$

where $c_k$ is a constant, G is said determined conductance and n is any integer between 1 and 10.

Fig. 1

Fig. 2

Fig. 3

a) Providing Substrate

b) Providing nozzle above substrate

c) Feeding metal strip to nozzle

d) Outputting metal strip through nozzle

e) Melting metal strip into melt pool

f) Establishing conductance

g) Determining conductance

h) Controlling vertical distance, based on conductance

Fig. 4

Fig. 5

Europäisches
Patentamt

European
Patent Office

Office européen
des brevets

# EUROPEAN SEARCH REPORT

Application Number

EP 19 21 3529

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | HAGQVIST PETTER ET AL: "Resistance based iterative learning control of additive manufacturing with wire", MECHATRONICS, vol. 31, 10 April 2015 (2015-04-10), pages 116-123, XP029343741, ISSN: 0957-4158, DOI: 10.1016/J.MECHATRONICS.2015.03.008 * formula (5); figures 1-3, 6 * * page 116, column 1, lines 9-14 * * page 117, column 2, lines 3-6 * * page 118, column 2, line 28 - page 119, column 2, line 17 * * page 119, column 2, lines 30-35 * * page 120, column 1, lines 5-10 * * page 120, column 2, lines 28,29 * * page 121, column 1, lines 2-5,8-30 * | 1-14 | INV. B23K5/18 B23K9/04 B23K10/02 B23K11/00 B23K15/00 ADD. B23K9/12 |
| A,D | GB 2 551 163 A (GKN AEROSPACE SWEDEN AB [SE]) 13 December 2017 (2017-12-13) * page 1, lines 6-32 * * page 5, line 27 - page 6, line 20 * | 1-14 | TECHNICAL FIELDS SEARCHED (IPC) B23K |
| A | US 2015/183045 A1 (PETERS STEVEN R [US] ET AL) 2 July 2015 (2015-07-02) * paragraph [0023]; figure 1 * | 1-14 | |

The present search report has been drawn up for all claims

| Place of search | Date of completion of the search | Examiner |
|---|---|---|
| Munich | 25 June 2020 | Seiderer, Jens |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

           

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 19 21 3529

This annex lists the patent family members relating to the patent documents cited in the above-mentioned European search report.
The members are as contained in the European Patent Office EDP file on
The European Patent Office is in no way liable for these particulars which are merely given for the purpose of information.

25-06-2020

| Patent document cited in search report | | Publication date | Patent family member(s) | Publication date |
|---|---|---|---|---|
| GB 2551163 | A | 13-12-2017 | NONE | |
| US 2015183045 | A1 | 02-07-2015 | NONE | |

EPO FORM P0459

For more details about this annex : see Official Journal of the European Patent Office, No. 12/82

**EP 3 831 525 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- GB 2551163 A